# EUROPEAN PATENT APPLICATION

(11) **EP 1 919 155 A1**
(43) Date of publication of application: **07.05.2008**
(21) Application number: 06291698.6
(22) Date of filing: 31.10.2006
(51) Int. Cl.: H04L 29/06, H04L 29/12

(54) **Resolution of flexible address schemes for IMS services**

(71) Applicant: Alcatel Lucent, 75008 Paris (FR)
(72) Inventor: Van Ewijk, Adrianus Johannes, 2018 Ekeren (BE); De Vriendt, Johan André, 9051 Afsnee (BE)
(74) Representative: Narmon, Gisèle Marie Thérèse

(57) **Abstract**

To resolve a Uniform Resource Identifier (URI) for use in routing messages in or between IP Multimedia Subsystem (IMS) networks, a query (101;201) is sent to resolve this URI from a device (120;220) to a private name server (121;221). The private name server (121;221) attempts to resolve the URI. In case of failure the method further involves the sending of a new query (104;203) for resolving the URI to a public name server (122;222). The public name server (122;222) resolves the URI in the new query (104;203).

## Description

### Field of the Invention

The present invention generally relates to the address resolution in IP Multimedia Subsystem (IMS) networks. Address resolution is performed by various nodes in an IMS network in order to route messages between these nodes. The main use for address translation is when messages are routed between different networks and in case of roaming users.

### Background of the Invention

identification of users and nodes in a network is generally done by using alpha numeric representation of the systems such as domain names, rather than using a numerical representation. The systems themselves however, use the numerical representation like for instance an Internet Protocol (IP) addresses. Translation of the alphanumeric to the numerical representation needs to be implemented in the network. IP Multimedia Subsystem (IMS) networks use IP addresses to route messages through these networks and between various networks. Every message sent in IMS networks contains a Session Initiation Protocol (SIP) Uniform Resource Identifier (URI) which is an alphanumeric representation used to determine the receiving node of the message. These SIP URi's contain a domain name which identifies the network where the receiving node is located.

A typical implementation to perform the translation from alphanumeric to numerical representation is the Domain Name System (DNS). DNS is a database system wherein domain names are organised according to a tree structure. The database is distributed between various DNS servers. It is a common practice for companies to organise their own domain for applications such as websites or email. Companies thereto provide name servers which are capable of performing the translation. A name server which is responsible for a particular part of the domain name space, is called an authoritative name server. All changes are made to this name server, and other name servers can query an authoritative name server to retrieve the most up to date information.

The Official Document IR.65 version 3.5, released by the GSM Association (GSMA) on August 14, 2006 covers IMS Roaming & Interworking guidelines. In this document two possible solutions are suggested for the use of DNS by IMS.

A first possible solution, which also appears to be the most convenient one, is to use the public DNS servers which are also used in the Internet to provide translation to nodes in an IMS network. The main issue with switching to a pure public operated DNS infrastructure is security. All the information will be available to the public and large operators are reluctant to share any information which concerns their networks and the operation thereof. A second possible solution makes use of existing private DNS servers which are managed by a particular organisation, for instance those managed for General Packet Radio Service (GPRS) Roaming. There are several possible implementations when using the existing private DNS servers to provide translation of domain names to IMS nodes. However, each of these implementations comes with its drawbacks.

A first possible implementation is the use of a specific domain in SIP URI's and a naming scheme defined by for instance the organization which manages the private DNS servers. An example of this is the 3gppnetwork.org domain used by the GPRS Roaming eXchange (GRX) which is operated by GSMA. In this case only GSMA is able to add new operators to the system and therefore allow them to operate their own IMS network and communicate with other IMS networks. Further it is not possible to use the 3gppnetwork.org domain in messages that have to be routed over public networks. Public DNS servers are unable to resolve this domain. This prevents companies for instance from placing calls to mobile users from SIP enabled devices in their corporate network.

Another possible implementation is to add a subset of the operator's global DNS infrastructure to the private DNS infrastructure used in networks such as GRX. This practice may lead to serious conflicts between both DNS infrastructures as it is a human responsibility to duplicate all changes as well. Therefore this implementation requires more human effort and is thus more prone to failure. Any human error may lead to networks becoming unreachable and disruptions in communication. It also raises the question of who will be responsible for the duplicated information in the private DNS infrastructure.

A third possible implementation of this functionality is by mixing public and private DNS infrastructure. This implementation offers some advantages but introduces new problems which are related to the use of public DNS infrastructure. However this implementation will be further examined below.

Currently there is no connection between the private DNS servers used in GRX and the public DNS servers such as those used for the Internet. This offers a level of security by preventing access to the private name servers by the general public and malicious persons in particular. It is impossible to discover the organisation of an IMS network and consequently it is hard or impossible to organise attacks on crucial nodes of the IMS or GPRS network. It is obvious that there is a desire to retain every security aspect when extending current functionality.

The main players in the telecommunications market currently operate fixed and mobile broadband access xDSL and GPRS networks and are likely to be interested in offering IMS services as well. Most of these players are member of GRX or a similar private managed network to offer GPRS roaming and interworking to their customers. Therefore it is a logical step to use the services provided by GRX in order to provide IMS services and interconnection of IMS networks.

Because the 3gppnetwork.org cannot be addressed in public networks, and operators are not in control of the contents of this domain, it becomes desirable for operators to use their own domain names and benefit from the advantages provided by for instance GRX. Possible ways to achieve this are suggested in section 9.4 of Official Document IR.65 document, along with reasons to avoid these solutions. These solutions all require some modification of the current GRX infrastructure (i.e. altering the URI scheme by adding the operator domain as a prefix to the 3gppnetwork.org domain which is currently used) or add a significant amount of human effort to the requirements (i.e. by keeping a statically configured list at the operator).

The DNS servers used for GPRS Roaming, the GPRS Roaming eXchange (GRX), are described in Official Document IR.67 version 1.4, released by the GSM Association (GSMA) on August 9, 2006. This document describes the structure of the DNS servers and the steps involved in resolving a domain name. In general the DNS servers in GRX operate in the same way as DNS servers available to the general public. The set of domains known here however, is limited to specific domains defined by GSMA.

A series of requirements for Next Generation Networks (NGN) are specified in ETSI TISPAN contribution 11bTD079 and ECMA TR/91 (ETSI TR 102 478). These requirements provide the means for enterprises to build their own Next Generation Corporate Networks (NGCN) and provide services such as SIP. If the NGN provide an implementation of all these requirements, interaction between NGN and NGCN or between several NGCN through NGN becomes possible. However, requirement 12 specifies that an NGN must allow an NGCN to assign new identities within its domain without prior arrangement with the NGN. Up till now, this is not possible as only an NGN is known amongst these networks. Therefore a problem arises in providing an NGN which fully qualifies for all the requirements.

It is an object of the present invention to provide operators a method for using their own domain names in combination with a DNS infrastructure which is managed by an organisation and which is completely separated from the DNS infrastructure used by the general public in the Internet. It is another object of the present invention to offer this functionality with little modifications to the existing systems and a further object of the present invention is to provide a way to use the information within the public DNS infrastructure to accomplish the use of operator domain names. It is another object of the present invention to provide a system which requires little human effort to set up and maintain. A further object of the present invention is to make the system less error prone than the solutions suggested in the prior art. It is another object of the present invention to provide a solution for the problems which exist with Next Generation Networks and allow them to use their own identities.

### Summary of the Invention

According to the present invention, the above described objects are realized and the shortcomings of the prior art solutions are overcome through a method for resolving a Uniform Resource Identifier (URI) for use in routing messages in or between IP Multimedia Subsystem (IMS) networks, as described in claim 1, comprising the following steps:
a. sending a query for resolving the Uniform Resource Identifier (URI) from a device capable of sending messages to IP Multimedia Subsystem networks, to a private name server; and
b. resolving the Uniform Resource Identifier (URI) by this private name server;
c. sending a new query for resolving the Uniform Resource Identifier to a public name server in case resolving the Uniform Resource Identifier by the private name server fails;
d. resolving the Uniform Resource Identifier by the public name server; and
e. receiving a response to the query by the device.

In the context of the present invention, resolving a URI means any step or combination of steps involved in attempting to transform for instance the domain name which is part of the URI into an IP address or a different domain name using standard DNS procedures. The standard DNS procedures comprise examining the cache of a DNS server, communicating with different name servers and retrieving information from the known domain names. Caching can be provided by name servers or nodes in a network, depending on their configuration. Communication with different name servers can be due to referrals in order to determine the authoritative name server or to retrieve the information from the authoritative name server. If resolving is performed by a name server this can be either providing information about the domain names it is authoritative for, or retrieving information from other name servers.

A query is a message defined by DNS standards containing a request for information. The requested information can be an IP address that relates to a domain name, a location of a service to handle certain protocols, a referral to a different domain name. A query is answered with a response that contains the requested information. Eventually the system which sent the query will receive this response and be able to use the information therein for tasks such as routing messages or setting up connections to a particular host.
Not every domain is known by DNS servers, for example a typing error in a domain name may result in a request for a non existing domain. When a name server has performed all possible lookups (i.e. cache or different name servers) and is unable to provide an answer to the query, an error response is sent. When such an error is received, it is considered as a failure to resolve a URI by the name server.

Public and private DNS servers are to be considered as available to the public or not. Public DNS servers are for instance those DNS servers which are used by the general public to access various services on the Internet. Private DNS servers are those which are managed by a certain organisations such as a company and of which the use is limited to members of such organisation or people who have an agreement with such an organisation. An example of this is the GRX which is operated by GSMA and provides DNS services among other services, and these services can only be consulted by members of GSMA and operators involved with GSMA.

According to the invention, such private DNS servers now consult a public DNS server in case they fail to resolve a SIP URI. Thus, instead of indicating it is unable to resolve a SIP URI, the private DNS server issues a request to a public DNS server to resolve the SIP URI. Alternatively the node in the IMS network whereto the private DNS server indicates that it cannot resolve the SIP URI, gets in touch with a public DNS server according to the invention.

The advantages of these extra steps are obvious. Operators are not tied to the domain names known by the private name servers or defined by organisations such as GSMA. The strict separation between private operated and available DNS servers and public available DNS servers is kept and therefore the security provided by the separated systems is maintained. Providing the translations between both domains is a responsibility of the operator using its own domains who needs an agreement with an operator present in the private DNS servers. Hence the amount of additional labour introduced by this system is very limited, only a few extra records are required in the public DNS servers of operators.

A device according to claim 6 is adapted to perform the steps required to offer all objectives of the present invention. This device, generally a node in an IMS network, is able to perform steps described in claim 1. It is able to send a query to a private name server and to receive a response. If such a response indicates that the private name server was unable to resolve the URI, the device is capable of sending a new query to a public name server. This enables the device to check both private and public name servers and allows it to find an answer for a URI containing a domain name which is not available in private name servers.

An alternative device according to claim 7 offers the functionality required to solve the problems found in prior art solutions. This device, generally a private name server is able to receive a query and resolve this query. If the device is unable to resolve this query, it is able to query another, public, name server to resolve the query. This enables the device to act as an intermediate system between a node and the public name servers. It allows for the translation of a URI using public name servers in a manner that is transparent to the node that issued the original query to the device.

Optionally the node which needs to route a message may perform step c of claim 1, as described in claim 2.

This node is responsible for routing a message between two IMS networks and therefore may be capable of communicating with systems located outside the own network. This way of implementing the current invention requires additional security measures in this node to avoid intrusion of the node. Due to the present security in these nodes, they are ideal candidates to communicate with the public DNS servers and maintain the separation between public and private DNS servers.

Optionally the private name server may send the new query mentioned in step c of claim 1, as described in claim 3.

When using the private name servers to contact the public DNS servers, transparency is created for the nodes that route messages. These systems require no modifications and only perform a single query resulting in the information they require. Name servers are designed to handle massive amounts of requests and can be adapted to look for an answer to a query by contacting other name servers. Therefore, limited adaptations are required to the private DNS servers to support this implementation of the present invention. Again no information about the IMS network is sent over public networks, only domain names. Location of nodes is therefore not revealed to the general public and security is maintained.

In an optional embodiment of the present invention, NAPTR records can be used to translate a publicly known domain name to a domain name known in the private infrastructure as described in claim 4.

NAPTR records are described in RFC 2915. They generally are used to rewrite an existing line of text into a new domain name or URI. A typical implementation of NAPTR records is the mapping of telephone numbers to a URI using e.164 number conversion as described in RFC 2916.

According to the invention, such NAPTR records may be added to the configuration of the authoritative name server for the domain. These records will provide a domain name of the operator which is known by private DNS servers.
NAPTR records offer flexibility through the use of regular expressions, resulting in a few records able to translate several domains to a single domain known by private name servers.

In an alternative optional embodiment of the present invention, SRV records can be used to translate a publicly known domain name to a domain name known in the private infrastructure as described in claim 5.

SRV records are described in RFC 2782. This type of records is typically used to offer load balancing and backup solutions. Generally several records are used to denote a single service where each record has a priority and a weight. The priority is used to define backup services, the weight of a record can be used to specify how much traffic should go to each of the systems.

### Brief Description of the Drawings

Fig. 1 is a flow diagram illustrating a first embodiment of the present invention wherein a User Agent is able to contact a public DNS server; and
Fig. 2 is a flow diagram illustrating a second embodiment of the present invention wherein a private DNS server is used to contact a public DNS server.

### Detailed Description of Embodiment(s)

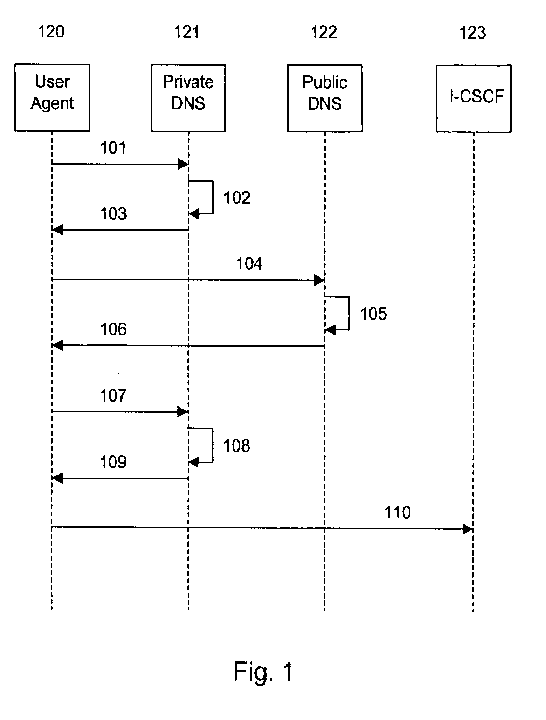

Figure 1 shows the message flow in a first embodiment of the present invention. This embodiment contains a User Agent (UA) 120, a private DNS server 121, a public DNS server 122 and a node 123 in a foreign IMS network.

In this first embodiment of the invention, the User Agent 120 can be a fixed device with software which provides videophone functionality through the IMS network or a mobile device with a Push to Talk Over Cellular networks (PoC) application. PoC is an IMS service which allows users to talk to each other by pressing a key on their mobile device. It uses a permanent online connection such as a GPRS connection to an IMS network and transforms the spoken words into datapackets which are transmitted to the IMS network. The IMS network will route the packets to their destination and the receiving user is able to hear the spoken words. The PoC application serves as an example of a source for SIP Requests and the PoC application uses various other software applications to perform various tasks. For instance, the PoC application can use a DNS resolver implemented in the device whereon the PoC application is running to retrieve information from DNS servers which is required to send requests. The PoC application also uses an implementation of the TCP/IP protocol stack to transmit data to other nodes and DNS servers.

The private DNS server 121 and public DNS server 122 are default software applications which offer DNS services. Possible software applications that can constitute the private DNS server 121 and public DNS server 122 are BIND, advertised at http://www.isc.org/index.pl?/sw/bind/ and PowerDNS, advertised at http://www.powerdns.com/, but any other application which supports the use of SRV and/or NAPTR records can be used. It is assumed in this first embodiment that BIND is used to offer DNS services. The distinction between private and public is made based on the location of the servers. Public DNS server 122 can be contacted by the general public for instance when sending emails or browsing a website. The private DNS server 121 is restricted to a small set of users. An example of the private DNS server 121 is a DNS server used in the GPRS Roaming eXchange (GRX) network. Roaming is the act where a user connects to a network which does not belong to the mobile telephony operator with whom they have a contract. For instance if a person pays operator A in Belgium for telephony services, this person can use the network of operator B in France if operator A and operator B have a roaming agreement. Thus, roaming makes it possible to use a contract with an operator and receive services in several other countries. The ability of roaming allows users to move freely while using their IMS enabled devices and applications.

The node in the foreign IMS network drawn in Fig. 1 is an Interrogating Call Session Control Function (I-CSCF) 123. Packets are sent to this I-CSCF 123 in order to be passed onto the IMS network, so the I-CSCF acts as a proxy server on the border of the IMS network and is an entrance point to the IMS network.

This embodiment is described with reference to two networks, the private and the public network, as the problem underlying the current invention is particularly encountered when messages have a destination which is located outside the network of which the origin is part. This first embodiment assumes that two IMS networks exist, of which one belongs to operator A and uses the operatora.com domain and, the other belongs to operator B and uses the operatorb.be domain. For this embodiment it is assumed that operator B is a public operator who offers various communication services such as mobile telephony, GPRS and IMS to the public. As such, operator B is a member of the GRX for roaming and able to use the services offered by GRX.

In this first embodiment, user B of UA 120 who is located in the network of operator B wants to talk to user A located in the network of operator A using a PoC service. User B thereto needs to know a URI that can identify user A in the network of operator A. Here this URI is sip:usera@ims.operatora.com. The SIP request used to initiate this connection is a SIP Invite request 110.

In Figure 1, it is assumed that UA 120 needs to route a message 110 to the Interrogating Call Session Control Function (I-CSCF) 123. This message 110 is a SIP Invite request which can be used to establish a PoC session between two users. User B is a customer of operator B and wants to talk to user A who is an employee at operator A. User B therefore needs to send the SIP Invite request 110 to user A and uses the SIP URI that identifies user A in this request. Typically any SIP request consists of a header and a body, where the header contains mandatory information about the source, destination, route and the contents of the request 110 and the body contains the contents of the request 110. The initial part of a SIP request 110 defines which type of request that is presented (in this case Invite), a URI that identifies where the request 110 has to go (in this case sip:usera@ims.operatora.com) and the version of SIP which is used (for instance 2.0).

Before the UA 120 is able to send the SIP Invite request 110 to the I-CSCF of operator A, it needs the IP Address of I-CSCF 123 as only the domain is known from the SIP URI. Therefore UA 120 will form a query 101 and send this to a private DNS server 121. This query 101 is a packet formatted according to the DNS protocol and contains a request for the IP address that is needed to route the SIP request 110. In query 101 the UA 120 provides a domain name (in this case ims.operatora.com to a private DNS server 121 and asks to return the IP address of the I-CSCF 123 which relates to the domain that is specified in the request. In order to be able to find and contact a DNS server, the UA 120 has to be configured with addresses of DNS servers it can use. This can be done using a static configuration on the device or the addresses of DNS servers can be provided using protocols such as the Dynamic Host Configuration Protocol (DHCP).

The private DNS server 121 will attempt to resolve the domain name using local cache and DNS information as is indicated by arrow 102 in Fig. 1. Indeed, a DNS server can be configured to keep a cache of all the information which has been collected before. This means that every requested domain name is stored along with the corresponding IP address, and these records are stored for a specific amount of time. Caching is a mechanism which is used to improve efficiency and reduce the amount of requests that are made to other DNS servers. In addition to its own cache, DNS server 121 may consult the DNS information that is contained in the network of DNS servers which make up the entire domain name space defined in the private network. For a private DNS server, this domain name space is typically small. Only particular operators like operator B are known in this name space. Operator A is not part of GRX and therefore the domain of operator A can be assumed to be undefined in the domain name space used by the private DNS server 121. As a consequence the private DNS server 121 cannot return a result for a query like 101 requesting resolution of the domain of operator A.

It is noted that if the UA 120 would have requested an IP address for operator B, the private DNS server 121 would be able to respond with that IP address and the UA 120 would be able to route the SIP Invite request 110 to the next node. In this case however, where an address is requested for operator A, whose domain name is unknown to private DNS server 121, the response 103 to query 101 shall contain a notice of failure to resolve the SIP URI. This means that the UA 120 is still not able to send the SIP Invite request 110 to I-CSCF 123 upon the receipt of the private DNS servers response 103 and further action is required.

Due to this failure, UA 120 has to try a different approach to discover the required IP address. In accordance with the present invention, UA 120 now forms a new query 104 which requests a DNS server, in this case a public DNS server 122, to answer with a domain name that is known by the private DNS server 121.

Operator A is not a public operator who provides services to the general public and therefore is not part of GRX. Because operator A does offer IMS services to its employees, it needs a link to the public IMS networks such as that of operator B. This is achieved with an agreement for example between operator A and operator B. This agreement allows operator A to have an IMS network with particular services, and be connected to the public IMS networks through the network of operator B. A requirement therefore, is that a request for the entrance point of the IMS network of operator A returns the entrance point of operator B as a response. Requests for users in the network of operator A need to be routed through the network of operator B, and operator B will deliver these messages to the network of operator A. Due to this setup of the systems, a certain implementation of the DNS infrastructure is required. In this implementation, operator B is known in the DNS servers of GRX. Operator A provides a translation from its domain (for instance ims.operatora.com) to the domain of operator B (for instance ims.operatorb.be).

The public DNS server 122 will attempt to answer the new query 104 using local cache and DNS information as indicated by arrow 105 in Fig. 1. The local cache and DNS information are very similar to those used in step 102. The local cache is the information stored by the public DNS server 122 in relation to all the requests it has answered before. The DNS information relates to the domain name space known to the public DNS server 122. This domain name space is significantly larger than the domain name space known to the private DNS server 121 and generally contains all the domains that are registered. If public DNS server 122 is able to resolve the URI, a response 106 is formed containing a new domain name that is known to the private DNS server 121. Resolving in this context means determining the domain of the public IMS operator B, who provides a link to the public IMS networks for operator A. The public DNS server 122 will deliver for example ims.operatorb.be as new domain in the response 106 that is sent to the UA 120.

The public DNS server 122 can provide the translation from ims.operatora.com to ims.operatorb.be by using specific records in the DNS configuration. In this first embodiment of the invention, NAPTR records are used for the translation. NAPTR records define a flexible way of responding with a URI to a request. This enables the public DNS server 122 to receive a request for sip:usera@ims.operatora.com and respond with sip:usera@ims.operatorb.be. The UA 120 will be able to route a message with the latter request URI as it will be able to contact the private DNS server 121 with a query to resolve the latter URI. Because operatorb.be is known by the private DNS server 121, it can provide the required IP address to the UA 120. The UA 120 will request this translation with query 107. This query contains the translated URI and after a new check of local cache and the DNS information indicated by arrow 108 in Fig. 1, the private DNS server 121 is able to provide the information which is needed by the UA 120 to route the SIP Invite request 110, and this information is delivered to the UA 120 with response 109.

In case the public DNS server 122 is unable to resolve the domain name, so both private and public DNS Servers 121 and 122 are unable to deliver the required IP address, the process is stopped and the UA 120 will not be able to route message 110 to I-CSCF 123 because it is unable to obtain an address for it.

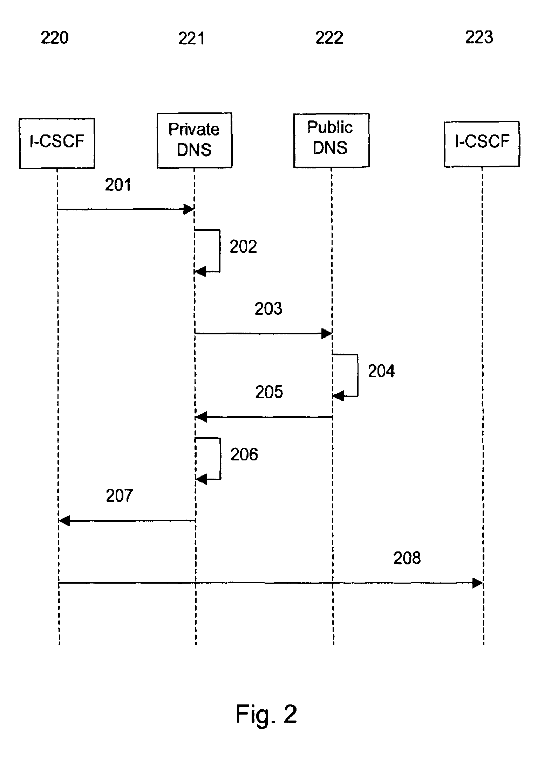

Figure 2 shows the message flow in an alternative embodiment of the present invention. This embodiment contains a node in an IMS network 220, a private DNS server 221, a public DNS server 222 and a node 223 in a foreign IMS network. Private DNS server 221 and public DNS server 222 are not linked to each other according to traditional DNS.

Traditional DNS is formed by a tree-like structure of servers. At the top are the DNS Root servers which have information about the Top Level Domains (TLD). A DNS server who needs to resolve a hostname can contact a root DNS server to find out which DNS server is authoritative for a particular TLD. The DNS server can contact the authoritative DNS server for the TLD to find out which DNS server is authoritative for a particular domain. The DNS server will then contact this authoritative DNS server to resolve the hostname.
In this system, DNS servers can refer on to another, where the latter has the requested information or is able to refer to a DNS server who can. This entire process can happen during the steps illustrated by arrows 202, 204 and 206. The difference here is that the public DNS 222 is not reachable through traditional DNS referrals. Private DNS server 221 has some knowledge about how to contact public DNS server 222 in its configuration, very similar to the configuration of a typical personal computer system that is able to perform DNS queries.

In this alternative embodiment of the invention, node 220 and node 223 are both Interrogating Call Session Control Functions (I-CSCF). One of the tasks of an I-CSCF is to act as an entrance point to an IMS network. Nodes outside a particular IMS network can contact the I-CSCF of that IMS network to send messages onto that network.

The public DNS server 222 is a default software application which offers DNS services. It is assumed that PowerDNS, advertised at http://www.powerdns.com/, is used in this second embodiment as public DNS server 222. Public DNS server 222 is considered to be public because it offers DNS services to the general public. Anyone is able to contact public DNS server 222 with requests for specific DNS information.

A DNS server such as private DNS server 221, is considered private because it provides information only to a limited amount of users. In this embodiment, the DNS servers provided by GRX are private DNS server 221 and only operators connected to GRX are able to contact private DNS server 221. The domain name space known to private DNS server 221 is generally small, whereas the domain name space known to public DNS server 222 is substantially larger. Public DNS server 222 has knowledge, or is able to obtain that knowledge, about all the domains which are registered and used for the internet.

Private DNS server 221 is, in this embodiment of the invention, a software application which offers DNS services and which differs from other DNS software applications such as PowerDNS by the ability to perform steps which are not part of standard lookups. Private DNS server 221 can receive queries from other devices in a network with requests for specific DNS information and attempt to provide the requested information, a process further described below. If however the private DNS server 221 is unable to provide the requested information because the request relates to a domain which is only known to public DNS server 222, the private DNS server 221 is able to contact public DNS server 221 with a request for information, e.g. request 203 in Fig. 2.

The above mentioned queries are messages sent to DNS servers formatted according to the DNS standards which contain a question for information. An example of a query is a request for the IP address of a particular server. A DNS server that receives a query can perform various steps in order to find a response. A first step could be a lookup in the local cache which is maintained by the DNS server. Caching means storing information about previous queries for a specific amount of time. So, if a DNS server has provided the answer to a query, it will store that answer for any subsequent request made to the name server during a specified amount of time. This reduces the amount of traffic generated by a DNS server to other DNS servers and increases the amount of queries which can be handled by the DNS server. Another step could be consulting the information about the domains for which the DNS server is responsible. If the DNS server is responsible for the domain specified in the query, it can retrieve the information from its own database and provide it as a response. Another step could be contacting other DNS servers in order to locate the authoritative name server for a particular domain and then contact that name server for the required information.

This second embodiment is also described with reference to two different IMS networks. One network belongs to operator A who uses the operatora.com domain and is a public IMS operator who offers services to the general public. The other network belongs to enterprise B who uses the enterpriseb.com domain and who offers IMS services to its employees. In this embodiment it is assumed that a user A in the network of operator A sent a message to a user B in the network of enterprise B. This message is a SIP Invite request 208 used to establish a session between both users. I-CSCF 220 receives a SIP Invite request from for instance a UA and needs to route this SIP Invite request with request URI sip:userb@enterpriseb.com, specified in the SIP Invite request to I-CSCF 223. I-CSCF 220 will send the received SIP Invite request as SIP Invite request 208 after address translation.

I-CSCF 220 requires an IP address for I-CSCF 223 before it can transmit SIP Invite request 208 to I-CSCF 223. Therefore I-CSCF 220 issues a query 201 to private DNS Server 221 with a request to resolve sip:userb@enterpriseb.com and I-CSCF 220 expects an IP address of I-CSCF 223 in the answer from private DNS server 221. Private DNS server 221 will attempt to resolve the URI using local cache and private DNS information as is indicated by arrow 202 in Figure 1. However, private DNS server 221 does not know about the enterpriseb.com domain and is not able to provide the requested information. Private DNS server 221 can contact public DNS server 222 with a query 203 to discover an alternative domain which can be used to contact enterpriseb.com. Public DNS server 222 has NAPTR records which translate any SIP URI containing enterpriseb.com into a URI containing operatorc.com as indicated by arrow 204 in Fig. 2. In this embodiment, operatorb.com belongs to another public IMS operator C, who has an agreement with enterprise B to provide IMS routing services. Operator C is known by private DNS server 221 because they are a public IMS operator. Translating from one domain to another can be done using local cache or DNS information and is indicated by arrow 204 in Figure 1. Public DNS server 222 sends a response to public DNS server 221 containing a new URI, for instance sip:userb@operatorc.com. Private DNS server 221 is then able to resolve this new URI using local cache and DNS information as indicated by arrow 206. The operatorc.com domain is known to the private DNS server 221, and therefore private DNS server 221 is able to provide an IP address to I-CSCF 220 in response 207. Using this IP address, I-CSCF 220 is able to transmit the SIP Invite request to operator C, who in turn will deliver the message to I-CSCF 223.

It is important to realize that arrows 107, 108 and 109 in Fig. 1 and arrows 206 in Fig. 2 are not required. These arrows indicate that the public DNS server 122 or 222 return a domain name which is known to respectively private DNS server 121 or 221 and where these DNS servers need to perform another attempt to resolve the domain name. It is possible to give up some security by providing the IP address directly through the public DNS server 122 or 222 to the requesting device (120 or 220). This does provide the desired flexibility by allowing a company to use their own publicly known domain.

It should be noted that the DNS server blocks drawn in the previous figures may represent a collection of DNS servers. Several DNS servers may communicate with each other after a query is received and before the response is sent. For instance an arrow originating from a DNS block and going to a DNS block may actually represent a multitude of messages. It may represent for instance a public DNS server first checking the local cache, secondly contacting a root name server, thirdly contacting a server for the top level domain (such as .com or .be), fourthly contacting the authoritative name server for somedomain.com and retrieving the desired information. DNS applications which are mentioned, such as PowerDNS and BIND, are only examples of existing software that could be used to provide DNS services. Any software or device capable of providing a translation from domain name to IP address and able to implement NAPTR and SRV records could be used as public DNS server 222.

It should further be noted that PoC is only an example of an IMS service. Another example is an Instant Message service which allows users to send text messages to each other and where these messages are Instantly displayed to the receiving user. Generally an application which uses an IMS network is expected to need communication between various IMS networks at some point.

The GRX infrastructure is used as an example of a private managed network. This example provides roaming and DNS services to GPRS networks. Any system which can provide a connection between IMS networks and which can provide address resolution services could be used as an alternative to GRX.

NAPTR and SRV records are used as examples in the above descriptions. Only their features are of importance to the present invention and alternatives can be used to provide the required functionality. Any DNS record type which is able to provide a redirection to a different system or is able to translate a URI into a different URI or which can be used to retrieve a different domain based on a specific domain may be used in an embodiment of the invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system or an integrated unit may fulfil the functions of several means recited in the claims. Any reference signs in the claims shall not be construed as limiting the respective claims concerned. The terms "first", "second", third", "1 ", "2", "3", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A method for resolving a Uniform Resource identifier (URI) for use in routing messages in or between IP Multimedia Subsystem (IMS) networks comprising the following steps:
a. sending a query (101;201) for resolving said Uniform Resource Identifier from a device capable of sending messages to said IP Multimedia Subsystem networks (120;220), to a private name server (121;221); and
b. resolving (102; 202) said Uniform Resource Identifier by said private name server (121;221);
**characterized in that** said method further comprises:
c. sending a new query (104;203) for resolving said Uniform Resource Identifier to a public name server (122;222) in case resolving said Uniform Resource Identifier by said private name server (121;221) fails;
d. resolving (105;204) said Uniform Resource Identifier by said public name server (122;222); and
e. receiving a response (106;205) to said query (104;203) by said device (120;220).

2. A method for resolving a Uniform Resource Identifier (URI) as described in claim 1, **characterized in that** said step c of sending said new query (104;203) is performed by said device (120;220).

3. A method for resolving a Uniform Resource Identifier (URI) as described in claim 1, **characterized in that** said step c of sending said new query (104;203) is performed by said private name server (121;221).

4. A method for resolving a Uniform Resource Identifier (URI) as described in claim 1, **characterized in that** said step d involves translating a domain in said Uniform Resource Identifier into a different domain using Naming Authority Pointer (NAPTR) records.

5. A method for resolving a Uniform Resource Identifier (URI) as described in claim 1, **characterized in that** said step d involves translating a domain in said Uniform Resource Identifier into a different domain using Service (SRV) records.

6. A device (120) for routing messages in an IP Multimedia Subsystem network, said device (120) comprising:
- means able to formulate a query (101) for resolving (102) a Uniform Resource Identifier (URI);
- means for sending said query (101) to a private name server (121); and
- means for interpreting a response (103) to said query (101);
**characterized in that** said device (120) is further adapted to formulate a new query (104) for resolving (105) said Uniform Resource Identifier (URI) and to send said new query (104) to a public name server (122) in case a response (103) from said private name server indicates a failure to resolve (102) said Uniform Resource Identifier (URI) by said private name server (121).

7. A private name server (221) for resolving (202) a Uniform Resource Identifier (URI) for use in routing messages in a IP Multimedia Subsystem network, said private name server (221) comprising:
- means for receiving a query (201) for resolving (202) a Uniform Resource identifier (URI);
- means for resolving (202) said Uniform Resource Identifier (URI);
- means for formulating a response (207) to said query (201); and
- means for sending said response (207);
**characterized in that** said private name server (221) is further adapted to formulate a new query (203) for resolving (204) said Uniform Resource Identifier (URI) and to send said new query (203) to a public name server (222) in case of failure to resolve (202) said Uniform Resource Identifier (URI) by said private name server (222).
